Europäisches Patentamt

(19) European Patent Office

Office européen des brevets

(11) Numéro de publication: **0 176 383**
**B1**

(12) **FASCICULE DE BREVET EUROPÉEN**

(45) Date de publication du fascicule du brevet:
17.01.90

(21) Numéro de dépôt: **85401582.3**

(22) Date de dépôt: **02.08.85**

(51) Int. Cl. ⁴: **G 05 B 19/10**

(54) Dispositif de commutation horaire programmable.

(30) Priorité: **03.08.84 FR 8412322**

(43) Date de publication de la demande:
**02.04.86 Bulletin 86/14**

(45) Mention de la délivrance du brevet:
**17.01.90 Bulletin 90/03**

(84) Etats contractants désignés:
**DE FR**

(56) Documents cité:
**EP-A-0 126 916**
**FR-A-2 461 972**
**GB-A-2 141 565**

**ELEKTOR, vol. 5, no. 5, mai 1979, pages 5.08-5.12, Elektor Publishers Ltd., Elektor House, Canterbury, GB; "Programmable timer/controller"**

(73) Titulaire: **TELEMECANIQUE**
**43-45, Boulevard Franklin Roosevelt**
**F-92504 Rueil-Malmaison Cedex (FR)**

(72) Inventeur: **Decottignies, Patrice**
**165, Avenue G. Eiffel**
**F-21000 Dijon (FR)**
Inventeur: **Terrand, Jacky**
**Résidence du Lac Bâtiment A**
**F-21200 Beaune (FR)**

(74) Mandataire: **Marquer, Francis**
**CABINET MOUTARD 35, avenue Victor Hugo Résidence Champfleury**
**F-78180 Voisins-le-Bretonneux (FR)**

LIBERGRAF, STOCKHOLM 1990

## Description

La présente invention concerne un dispositif de commutation horaire programmable du type comprenant au moins un interrupteur dont les commutations s'effectuent automatiquement sous la commande d'un processeur selon le déroulement d'un programme préalablement mémorisé dans un cycle horaire, journalier et/ou hebdomadaire.

D'une manière générale, on sait que de tels dispositifs de commutation, souvent appelés programmateurs, peuvent être utilisés dans de nombreuses applications, parmi lesquelles on mentionnera simplement l'optimisation du chauffage, de l'éclairage, de la climatisation ainsi que la commande de processus ou d'appareillages les plus variés. Ils peuvent également servir à modifier, séquentiellement, la valeur de consigne appliquée à un système asservi tel que, par exemple, un système de chauffage commandé par un thermostat.

Ces dispositifs font nécessairement intervenir:

- une horloge permettant l'affichage de l'heure, de la minute et, éventuellement, de la seconde, ainsi que le jour dans le cas d'un programmateur hebdomadaire,
- des moyens de programmation permettant la mémorisation d'un programme comprenant une suite d'ordres de commutation échelonnée dans le temps, et dans lequel chacun des ordres de commutation est défini par la nature de la commutation à effectuer et par l'instant où elle doit intervenir dans le cycle horaire, journalier et/ou hebdomadaire, et
- des moyens agissant sur l'interrupteur pour effectuer des commutations aux instants et selon la nature définis par le programme.

Bien entendu, ces dispositifs peuvent en outre comprendre de nombreux autres moyens tels que par exemple des moyens permettant d'interrompre le programme, des moyens permettant de modifier le programme en cours, des moyens de réglage de l'heure ou du jour de la semaine, des moyens de forçage de l'interrupteur etc....

A l'heure actuelle, il existe deux types principaux de programmateurs, à savoir, les programmateurs électromécaniques et les programmateurs numériques.

Les programmateurs électromécaniques utilisent habituellement un mécanisme d'horloge entraînant en rotation un équipage rotatif tel que par exemple un disque associé à une graduation circulaire servant à indiquer l'heure et, éventuellement, les jours de la semaine, cet équipage rotatif portant une succession de butées effaçables agissant, en position déployée, sur un interrupteur.

Les programmateurs numériques tels que, par exemple, celui qui se trouve décrit dans le brevet FR-A-2 461 972, font, quant à eux, intervenir un microprocesseur conçu pour exécuter de multiples fonctions et, en particulier, pour afficher l'heure et éventuellement le jour sur un dispositif d'affichage, pour mémoriser et pour exécuter un programme de commutation et un clavier permettant d'entrer les programmes et de commander les fonctions du microprocesseur en vue de la mise en oeuvre du programmateur.

L'invention concerne plus particulièrement un dispositif de commutation correspondant à ce second type de programmateur. Elle a plus particulièrement pour but:

- de centraliser un grand nombre de commandes sous un très petit volume de manière à pouvoir limiter au maximum l'encombrement du programmateur
- de réduire au maximum le nombre de touches du clavier;
- de simplifier autant que possible le mode d'emploi du programmateur, notamment en facilitant la programmation, la reprogrammation, et les opérations annexes telles que la remise à l'heure, etc...;
- d'optimaliser l'ergonomie du programmateur notamment par une symbolique appropriée de l'affichage et une disposition des touches du clavier adaptée à cette symbolique.

Pour parvenir à ces résultats, l'invention propose un dispositif de commutation horaire programmable du type comprenant, d'une façon analogue à celle décrite dans le brevet FR-A-2 461 972 précité, un circuit de commutation comportant au moins une voie, un dispositif d'affichage constitué par une cellule à cristaux liquides présentant une plage de visualisation horaire et un clavier comprenant un premier ensemble de touches permettant d'effectuer au moins le passage d'un mode de fonctionnement "Exploitation" au cours duquel se déroule le programme de commutation, à un mode de fonctionnement "Changement" pendant lequel l'opérateur peut créer ou modifier ledit programme, puis de revenir ensuite au mode de fonctionnement "Exploitation", ce premier ensemble de touches permettant d'effectuer également l'introduction de données.

Selon l'invention, ce dispositif de commutation est caractérisé en ce que ladite cellule comprend en outre une plage de fonctions comprenant plusieurs zones permettant chacune de visualiser des symboles de fonction qui changent selon le mode de fonctionnement dans lequel se trouve le dispositif, ces symboles constituant, pour chacun de ces modes, un menu différent de fonctions que l'opérateur a la possibilité d'exécuter, en ce que le susdit premier ensemble de touches ("ENTER", CLR, A/B) permet en outre de valider une donnée introduite en mode changement et de passer ensuite à une donnée suivante, et en ce que le clavier comprend en outre un second ensemble de touches dynamiques multifonction respectivement disposées en regard desdites zones et dont les fonctions, qui changent d'un mode de fonctionnement à l'autre, sont indiquées par les symboles présents dans les zones correspondantes.

Selon un mode d'exécution particulièrement avantageux de l'invention, le premier ensemble de touches comprend une touche "ENTER" servant à la fois pour la susdite validation et pour le passage d'un mode principal à l'autre. Ce premier ensemble de touches peut également comprendre une touche permettant de sélectionner une voie du circuit de commutation en effectuant sur cette touche une pression pour la première voie, deux pressions successives pour la seconde voie et n pressions pour sélectionner la nième voie.

Par ailleurs, la plage de fonction du dispositif d'affichage comprend quatre zones d'affichage de symboles disposées au droit de quatre touches dynamiques respectives du deuxième ensemble de touches. Les touches dynamiques sont de préférence alignées sous le dispositif d'affichage; elles peuvent toutefois être prévues autour du dispositif d'affichage lorsque les quatre zones de symboles sont disposées aux quatre coins du dispositif.

Comme précédemment mentionné, le dispositif selon l'invention comprend deux modes de fonctionnement principaux, à savoir, un mode exploitation et un mode changement.

En mode exploitation les fonctions des touches dynamiques qui sont indiquées par les symboles affichés sur les zones d'affichage sont alors les suivantes: deux des quatre touches servent à indiquer la nature du forçage (à 0 ou à 1) des deux voies du circuit de commutation, une troisième touche sert à l'annulation des forçages et la quatrième touche peut alors servir à indiquer le ou les jours de la semaine à partir duquel le processeur exécute le programme du dimanche à la place des programmes initialement prévus pour les différents jours de travail.

Le mode changement regroupe, quant à lui, plusieurs types d'opérations que l'opérateur peut être amené à exécuter et que le processeur affiche à la façon d'un menu sur les zones de symbole à la suite d'une pression sur la touche "ENTER" à partir du mode exploitation.

Dans cette configuration, les fonctions indiquées par le menu affiché sur les zones d'affichage sont les suivantes:

– une première touche sélectionne la mise à l'heure du dispositif de commutation;
– une deuxième touche sélectionne la programmation des consignes de marche/arrêt;
– la troisième touche sélectionne la visualisation des programmes;
– la quatrième touche sélectionne la création de combinaisons de jours.

A partir de cette configuration, le fonctionnement est alors le suivant:

a) Une pression sur la première touche provoque l'affichage de l'heure (heure, minute) et du jour à la valeur qu'elle avait au moment où s'est effectuée cette pression. Les deuxième, troisième et quatrième touches servent alors à incrémenter respectivement et exclusivement les heures, les minutes et le jour. La fin de la mise à l'heure s'obtient ensuite par une pression de la touche "ENTER" qui provoque un retour à l'affichage du menu.

b) Une pression sur la deuxième touche permet de sélectionner le mode changement. Les fonctions des touches dynamiques sont alors les suivantes:

– une pression sur la première touche entraîne un changement d'état de la consigne;
– une pression sur la deuxième touche incrémente l'heure;
– une pression sur la troisième touche incrémente les minutes;
– une pression sur la quatrième touche incrémente les jours.

c) Une pression sur la troisième touche permet de relire les consignes rentrées précédemment en se servant de la touche "ENTER" et de modifier le contenu des consignes par pression sur la deuxième touche.

d) Une pression sur la quatrième touche permet de créer des combinaisons de jours et en particulier de créer un regroupement de jours présentant un même programme journalier.

Le dispositif de commande à programmation horaire précédemment décrit permet donc de programmer des périodes de temps successives, ainsi que, pour chacune de ces périodes, un type de fonctionnement particulier du processus commandé.

Ainsi, dans le cas le plus simple, ce dispositif pourra effectuer une commande de type tout ou rien du processus, par exemple une commande marche/arrêt, allumage/extinction, etc...

Toutefois, l'invention ne se limite pas à ce seul type de commande. En effet, dans le cas où un autre paramètre intervient dans la commande du processus, le dispositif de commande pourra alors fournir un ordre de commande dont l'état est à la fois fonction du programme horaire établi par l'utilisateur et de la valeur du paramètre mesuré.

Dans le cas d'un système asservi tel que, par exemple une régulation en température, le dispositif de commande pourra être agencé de manière à fournir à chacune des périodes successives programmées, une valeur de consigne déterminée au système. Ce dispositif pourra alors avantageusement comprendre un comparateur apte à comparer le paramètre mesuré et la valeur de la consigne définie par le programme et a délivrer un signal de commande du processus en fonction du résultat de cette comparaison.

De même l'ordre de commande déterminé par le programme horaire peut consister en un ordre d'habilitation ou un ordre d'inhibition, l'ordre de commande n'étant alors fourni, pendant les périodes d'habilitation que pour des valeurs prédéterminées du paramètre mesuré en relation éventuelle avec une valeur de consigne préalablement mémorisée.

Le dispositif selon l'invention peut alors servir

d'interrupteur crépusculaire servant à commander automatiquement la mise en marche et l'arrêt d'un éclairage (enseignes publicitaires, vitrines, bureaux, éclairage public, etc...) en fonction du niveau d'éclairement et des heures de présence.

Selon une autre caractéristique avantageuse de l'invention, le dispositifs de commande à programmation horaire comprend un capot mobile par exemple basculant destiné à séparer les différents modes de fonctionnement en masquant une partie des touches du clavier et en laissant les autres apparentes.

Ainsi, par exemple en position ouverte du capot, la totalité des touches pourra être accessible, tandis qu'en position fermée du capot, seules les touches dynamiques pourront être sollicitées. Dans ce dernier cas le capot pourra comprendre, au droit de chacune des touches dynamiques, un graphisme indiquant la fonction de cette touche. Un mode de réalisation de l'invention sera décrit ci-après, à titre d'exemple non limitatif, avec référence aux dessins annexés dans lesquels:

La figure 1 représente, schématiquement, en perspective, un dispositif de commande selon l'invention;

La figure 2 est une vue schématique de la face frontale d'un dispositif de commande représenté figure 1;

La figure 3 est une vue à plus grande échelle de l'afficheur utilisé dans le dispositif de commande représenté figure 1;

Les figures 4 et 5 sont deux vues en perspectives d'un dispositif de commande du type de celui représenté figure 1, mais comprenant un capot basculant, en position fermée (figure 4) et en position ouverte (figure 5);

Les figures 6 et 7 sont des vues schématiques de la face frontale d'un dispositif de commande selon l'invention assurant la fonction de thermostat programmable, ce dispositif étant à l'état "capot fermé" (figure 6) et à l'état "capot ouvert" figure 7);

La figure 8 est une représentation schématique du circuit de régulation à consigne programmée utilisé dans le dispositif représenté figures 6 et 7;

La figure 9 est un diagramme représentatif d'une séquence de programme et de la courbe de température en fonction du temps obtenu par ce programme;

La figure 10 est une vue à grande échelle de l'afficheur utilisé dans un dispositif de commande pouvant assurer à la fois la fonction de thermostat programmable et la fonction d'interrupteur crépusculaire;

La figure 11 est une représentation schématique du circuit de commutation utilisé dans un dispositif de commande assurant la fonction d'interrupteur crépusculaire;

La figure 12 est un diagramme représentatif d'une séquence de programmation et de la commande d'éclairage en fonction du niveau d'éclairement.

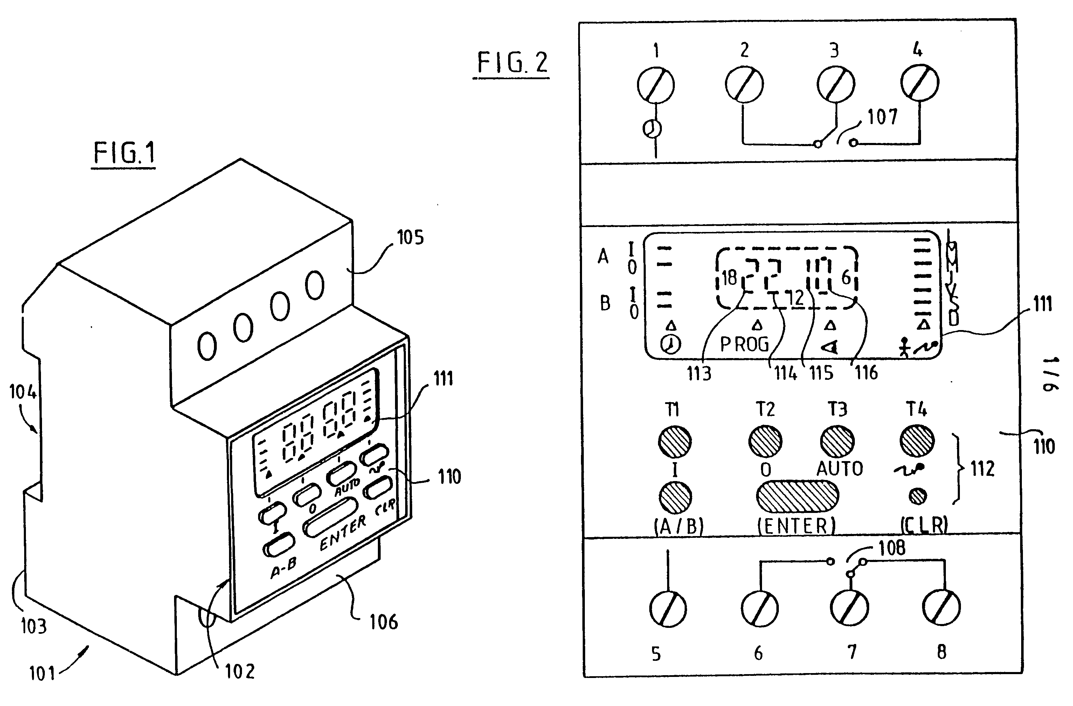

Tel que représenté sur la figure 1, le dispositif de commande à programmation horaire programmable se présente sous la forme d'un boîtier 101 de forme sensiblement parallélépipédique dont la face avant présente dans sa partie centrale un étagement 102 et dont la face arrière 103 comprend un évidement prismatique 104 de section en forme de queue d'aronde permettant la fixation du boîtier sur un rail classique de support.

Les parties 105, 106 de la face avant, situées de part et d'autre de l'étagement 102, sont munies de bornes de connexion 1 à 8 (figure 2) correspondant respectivement aux deux voies du dispositif de commutation (bornes 2 - 4 et 6 - 8) et à son alimentation (bornes 1, 5). Le dispositif considéré est susceptible de commuter deux voies il pourrait bien entendu commuter une seule voie ou plus de deux voies.

La face frontale 110 de l'étagement 102 comprend, quant à elle, une surface d'affichage 111 consistant en la cellule d'un afficheur à cristaux liquides et un clavier 112 comprenant quatre touches dynamiques $T_1$, $T_2$, $T_3$, $T_4$ disposées à proximité de la surface d'affichage 111 et trois touches, à savoir, une touche "ENTER" permettant notamment d'entrer en mode changement, d'assurer la validation d'une donnée et le passage à la suivante et de revenir en mode d'exploitation, une touche CLR d'annulation des programmes et une touche A/B assurant la sélection des voies (A ou B).

La fonction de ces touches sera définie d'une façon plus précise dans la suite de la description.

D'une façon plus précise, l'affichage utilisé dans cet exemple de réalisation est du type LCD possédant une pluralité de segments répartis dans quatre plages de visualisation, à savoir:

— une plage de visualisation horaire comprenant vingt-huit segments répartis en quatre ensembles 113, 114, 115, 116 de sept segments pouvant chacun représenter un chiffre de 0 à 9 et qui assurent l'affichage de l'heure et des minutes, et un segment (points DP) destiné à battre la seconde;
— une plage de visualisation journalière comprenant sept segments disposés en colonne, désignant le jour de la semaine, ces segments étant numérotés de $j_1$ à $j_7$;
— une plage programme permettant de visualiser le spectre du programme du jour, cette plage comprenant:
— un segment P composé de vingt-deux points disposés le long d'un rectangle entourant la plage de visualisation horaire de manière à constituer une graduation selon un contour fermé rectangulaire et trois chiffres 6, 12, 18;

7

– vingt-quatre segments $S_1$ à $S_{24}$ uniformément répartis autour dudit rectangle qui indiquent le spectre du programme du jour en combinaison avec ladite graduation; il va de soi que les segments $S_i$ peuvent être en nombre égal, multiple ou sous-multiple de 12 afin d'assurer l'indication souhaitée du spectre horaire du jour:

– une plage d'indication de l'état de la sortie des voies du circuit de commutation, cette plage comprenant quatre segments $A_0$, $A_1$, $B_0$, $B_1$ (état 0 ou 1 des voies A, B) et,

– une plage de fonction comprenant quatre zones 117, 118, 119, 120, destinée à l'affichage de cinq symboles désignant la fonction des touches $T_1$ à $T_4$ lors de l'affichage du menu, à savoir:

– le symbole ☻ (mise à l'heure) affecté à la touche $T_1$;

– le symbole PRG (programmation) affecté à la touche $T_2$;

– le symbole ◁ (visualisation) affecté à la touche $T_3$;

– les symboles ⚗ et ⚗ (jour de travail/jour de repos) affectés à la touche $T_4$; et

– quatre pointeurs triangulaires $T'_1$ à $T'_4$ établissant une correspondance entre lesdits symboles et les touches dynamiques.

Il convient de noter que les fonctions attribuées aux touches dynamiques $T_1$ à $T_4$ par les symboles ne sont effectives que lorsque ces symboles clignotent.

Le circuit électronique équipant le dispositif de commutation horaire précédemment décrit peut avantageusement être réalisé au moyen de deux cartes de circuit imprimé simples, à savoir:

– une carte comprenant le circuit d'alimentation, les organes de commutation de puissance et leur commande et les bornes de sortie;

– une carte de traitement recevant le clavier, l'afficheur et le microprocesseur.

Comme précédemment mentionné, la programmation du dispositif de commutation est de type menu c'est-à-dire que pour chacune des phases de programmation, les touches dynamiques ont une fonction différente indiquée par les symboles correspondants affichés dans les zones de symboles de la cellule de visualisation à cristaux liquides, et/ou des symboles inscrits à demeure sur le boîtier.

Cette programmation détermine deux modes principaux de fonctionnement, à savoir:

a) Un mode exploitation dans lequel:

– l'état des sorties est défini par les consignes (changement d'état) programmées;

– l'appareil indique l'heure courante, le jour et l'état des sorties;

– l'utilisateur peut forcer l'état de la ou des sorties;

– l'utilisateur peut définir des jours comme fériés.

8

b) Un mode changement dans lequel l'utilisateur peut:

– mettre à l'heure le dispositif;

– programmer les consignes;

– créer des combinaisons de jours qu'il peut utiliser en programmation;

– visualiser des périodes de marche sur la journée avec possibilité de voir les consignes de cette journée.

I – Mode Exploitation

Le fonctionnement du dispositif de commutation en mode exploitation comprend les six configurations suivantes:

1) *Exploitation sans forçage*

a) Dans ce mode de fonctionnement les zones de symboles affectées aux touches dynamiques indiquent:

– pour la touche $T_1$, le symbole "I" correspondant au forçage à 1 des sorties;

– pour la touche $T_2$, le symbole "0" correspondant au forçage à 0 des sorties;

– pour la touche $T_3$, le symbole "AUTO" correspondant à l'annulation des forçages à 1 ou à 0;

– pour la touche $T_4$ le symbole "⚗" correspondant aux jours fériés.

Dans cet exemple, les symboles "I", "0", "AUTO" et "⚗" sont inscrits à demeure sur le boîtier.

b) Lorsqu'aucune sortie n'est forcée et si aucun jour férié n'a été programmé, l'état de chaque sortie est défini par l'état de la consigne immédiatement antérieure à l'heure courante (si le secteur est présent). Si deux consignes (ou plus) demandent un état différent de la même voie, à la même heure, l'état pris par la sortie est celui de la consigne lue en dernier par le processeur dans la boucle de scrutation des consignes.

c) L'afficheur indique en l'absence de forçage et de jours fériés:

– l'heure courante sur les quatre zones de chiffre de la plage de visualisation horaire;

– la seconde par le clignotement à I Hz environ du point entre Heure et Minutes;

– le jour par le segment correspondant (segment j (1) du haut = lundi) (segment j (7) du bas = dimanche)

– l'état des sorties sont allumés les segments AI si la sortie A est commandée BI si la sortie B est commandée A0 si la sortie A n'est pas commandée B0 si la sortie B n'est pas commandée.

En cas de forçage à 1 ou à 0, de programmation de jour férié ou d'absence secteur, voir les paragraphes correspondants pour connaître la définition de l'affichage.

### 2) Forçage à 0 des 2 voies

Un appui sur la touche T2 entraîne un forçage des sorties à 0, c'est-à-dire que pour chaque sortie

a) *si l'état est 1*: il passe immédiatement à 0
b) *si l'état est 0*: la prochaine période de marche est annulée
c) *annulation automatique du forçage*

Dans les deux cas précédents, le forçage à 0 de chaque voie est annulé lors de la première coïncidence de l'heure courante avec une consigne de désactivation de la sortie correspondante.

d) *contenu de l'affichage* (quand le secteur est présent)

L'affichage est identique à celui effectué en l'absence de forçage et de jours fériés sauf que:

— les segments A0 et B0 clignotent en phase à I Hz environ.

### 3) Forçage à 1

Le forçage est identique au forçage à 0 mais avec:

— 1 à la place de 0
— touche T1 à la place de touche T2
— activation à la place de désactivation
— A1 et B1 à la place de A0 et B0

### 4) Forçage d'une des deux voies seulement

a) l'utilisateur a la possibilité de ne forcer qu'une seule des deux voies à 1 ou à 0.

Pour cela, il sélectionne la voie par la touche A/B, une première pression permet de sélectionner la voie A et fait clignoter les segments A1 et A0; une deuxième pression sélectionne la voie B etc... (AI ou A0 repassent en fixe, BI et B0 clignotent); on force ensuite à I ou à 0 par pression sur la touche T1 ou T2.

b) le contenu de l'affichage est identique à celui obtenu pour le forçage des deux voies. Seul le segment AI ou A0 ou BI ou B0 correspondant à la voie forcée clignote, le segment correspondant à l'état de l'autre voie est allumé en fixe. Il convient de noter que si une voie A ou B est sélectionnée, les clignotements relatifs à cette voie s'arrêtent lorsque:

— dans une période de temps inférieure à deux minutes qui suit l'appui sur la touche A/B l'utilisateur n'a forcé ni à I ni à 0. L'appareil revient alors en exploitation sans forçage. Le contenu de l'afficheur est identique à celui obtenu lors de l'exploitation sans forçage.

— dans une période de temps inférieure à deux minutes qui suit l'appui sur la touche A/B, l'utilisateur appuie sur la touche "ENTER". L'appareil se place alors en menu. (Une deuxième pression sur "ENTER" est alors nécessaire pour revenir en exploitation).

### 5) Annulation manuelle du forçage

Un appui sur la touche T3 annule les forçages antérieurs et entraîne le retour au déroulement normal du programme.

### 6) Forçage JF (jour férié)

L'utilisateur choisit le jour de la semaine (qui peut être le jour courant) à partir duquel le processeur exécute le programme du dimanche à la place des programmes initialement prévus pour les différents jours. L'annulation de ce forçage se fait par pression sur la touche T3. Le forçage est effectif pour les deux voies. Chaque voie prend les états prévus dans son programme du dimanche.

### Affichage

– *Pendant la programmation*

— affichage normal de l'heure (heures et minutes)
— affichage normal de l'état des sorties
— affichage en fixe du jour courant (sauf lorsque l'on retient ce jour comme début du forçage; il est alors clignotant)
— affichage clignotant du symbole ⌁ et du segment du jour choisi pour le début du forçage.

– *en attente d'exécution*

— affichage normal de l'heure
— affichage normal de l'état des sorties
— clignotement du segment de jour choisi pour le début du forçage
— affichage en fixe du jour courant.

– *en cours d'exécution*

— affichage de l'heure courante
— affichage de l'état des sorties
— affichage en fixe du jour courant
— clignotement du symbole ⌁
— extinction du segment de jour retenu pour le début du forçage.

– *mode opératoire pour la programmation JF*

— une pression sur la touche T4 permet, à partir du mode exploitation de programmer le forçage JF. Cette pression produit notamment:
— un affichage du type de celui précédemment indiqué
— clignotement du jour du début de forçage JF c'est-à-dire:
— lors du premier passage dans cette programmation, le processeur propose le jour courant comme jour de début du forçage JF.
- lorsqu'une programmation de forçage JF a déjà été réalisée, c'est le segment correspondant au jour précédemment retenu qui clignote.
- chaque pression ultérieure sur la touche T₄
- décale de 1 (dans l'ordre chronologique) le segment de jour clignotant: ce jour est considéré comme début de forçage potentiel. (après le dimanche, rebouclage sur le lundi).

*– Validation de la programmation du forçage JF*

Elle se fait soit:

- Manuellement par appui sur la touche "ENTER" et passage en mode menu (une deuxième pression sur "ENTER" est alors nécessaire pour revenir en mode exploitation).
- Automatiquement, après une période de temps inférieure à deux minutes suivant la dernière pression sur la touche T₄. Le processeur revient en mode exploitation.

Au moment de la validation, le dernier jour choisi est pris en compte comme jour de début de forçage.

*– Annulation du forçage JF*

Elle est obtenue instantanément par pression sur la touche T₃ (auto):

- le processeur se remet à exécuter les programmes affectés aux différents jours et les sorties prennent l'état défini par ces programmes.
- l'affichage redevient strictement celui du mode exploitation (extinction de ⤳ ).

*– Exécution du forçage JF*

- si le jour choisi comme début du forçage est le jour courant, l'appareil exécute ce forçage dès la validation de cette programmation, c'est-à-dire:
- soit après la période de temps spécifiée inférieure à deux minutes qui suit la dernière pression
- soit après deux pressions sur "ENTER"
- si le jour choisi est différent du jour courant, l'exécution du forçage commence le jour programmé à 0h00.

**II – Mode Changement**

Le mode changement regroupe les fonctions de:

- mise à l'heure ( ⊕ )
- programmation des consignes (PRG)
- visualitation ( < )
- création de combinaison de jours ( ⚇ , ⤳)
On entre, en mode changement, en appuyant sur la touche "ENTER" et l'appareil affiche alors le menu: chaque zone de symbole indiquant la fonction associée à la touche dynamique correspondante.

- L'utilisateur a le choix:

  - ⊕ : mise à l'heure correspondant à la touche T₁
  - PRG: programmation des consignes de marche arrêt: touche T₂
  - < : visualisation des programmes: touche T₃
  - ⚇ ⤳ : création de combinaisons de jours: touche T₄ (jours travail/repos).
  - les symboles affichés dans chaque zone clignotent en phase à la fréquence de 1 Hz environ.

Dans cette configuration, le mode opératoire est le suivant:

- un appui sur "ENTER" fait repasser en mode exploitation
- un appui sur la touche T₁ fait passer en mise à l'heure
- un appui sur la touche T₂ fait passer en écriture du programme
- un appui sur la touche T₃ fait passer en visualisation du programme
- un appui sur la touche T₄ fait passer en création de combinaisons de jours.

1) *Mise à l'heure*

A partir de l'affichage du menu, une pression sur la touche T₁ permet de sélectionner la fonction de mise à l'heure.

a) *affichage*

- affichage en fixe du symbole ⊕ (les autres symboles du menu sont supprimés)
- affichage de l'heure (heure et minutes) à la valeur qu'elle avait lors de la pression sur la touche T₁
- affichage du jour (jour courant)
- affichage des 3 pointeurs triangulaires T₂, T₃ et T₄ qui clignotent à 1 Hz environ et en phase.
- suppression du point des secondes.

b) *modification de l'heure*

- les touches 1 et A/B sont inactives,
- l'action sur les touches T₂, T₃ et T₄ entraîne l'incrémentation respectivement et exclusivement des heures, minutes et jour,
- la pression sur une touche entraîne l'incrémentation immédiate de la donnée correspondante de +1; si la pression est maintenue, à partir d'une seconde, passage à une incrémentation à 4 Hz environ,
- les heures s'incrémentent de 0 à 23 et retour à 0,
- les minutes s'incrémentent de 0 à 59 et retour à 0,
- les jours s'incrémentent du segment J₁ au seg-

ment $J_7$ et retour au segment $J_1$,
- dès qu'une pression sur une touche a été réalisée le pointeur correspondant passe de clignotement en allumage fixe.

c) *fin de mise à l'heure*

Elle se fait par appui sur la touche "ENTER"

- Dès l'appui, le processeur gère l'heure après avoir réalisé une remise à zéro de tous les diviseurs ou registres précédant les minutes.
- L'appareil passe en affichage du menu.

2) *Programmation des consignes*

A partir de l'affichage du menu, une pression sur la touche $T_2$ permet de sélectionner cette fonction.

a) *Objectifs et définitions*

- l'utilisateur va créer son programme qui est composé d'une succession de consignes.
- une consigne contient les données suivantes:
- la voie concernée (A ou B)
- le jour (ou la combinaison de jours) d'exécution
- l'heure (heures et minutes) d'exécution
- l'état de la voie.

On notera à titre d'exemple que la consigne (I, 13h, 31, Lu, A) signifie que la voie A prend l'état 1 (sortie active) le lundi à partir de 13h31 et garde cet état jusqu'à ce qu'une autre consigne le modifie.

b) *Caractéristiques principales*

- les consignes sont obligatoirement affectées à une voie

c) *Affichage*

- affichage de PRG les autres symboles du menu sont supprimés
- les quatre pointeurs triangulaires $T_1$, $T_2$, $T_3$, $T_4$ clignotent en phase à 1 Hz environ
- le point entre heures et minutes est éteint.
- affichage du contenu de la consigne 1
- heures et minutes sur les zones de chiffre
- jour ou combinaison de jours sur les segments $J_1$ à $J_7$
- état de la voie sur AI, A0, BI, B0

Si la consigne n°1 est vide l'affichage est le suivant:

- quatre barres "- - - -" sur les zones de chiffre
- tous les jours ou la combinaison $C_1$ de jours de la voie A si l'utilisateur l'a créée
- AI

Pour la consigne n, lors de sa première programmation l'affichage indique:

- l'état inverse de celui de la dernière consigne programmée pour la même voie
- la combinaison de jours ou le jour d'exécution de cette consigne "- - - -" sur les zones de chiffre.

d) *Mode opératoire*

- *une pression sur la touche T1* entraîne un changement de l'état de la consigne et donc de l'affichage de AI à A0 (ou de BI à B0) et le pointeur $T_1$ passe en fixe.
- *une pression sur la touche T2* incrémente l'heure de +1. Le pointeur $T_2$ passe en fixe. (Si la consigne était vide, le contenu des chiffres qui était "- - - -" passe à 0h00). Après 23h passage de l'affichage à "- - - -" ce qui correspond à une consigne vide. Une pression maintenue plus de une seconde entraîne une incrémentation automatique à 4 Hz environ.
- *une pression sur la touche T3* incrémente les minutes de +1. Le pointeur $T_3$ passe en fixe. Si le contenu de l'afficheur était "- - - -" il passe à 0h00. Après 59 minutes passage à 00.

Une pression maintenue plus de une seconde entraîne une incrémentation à 4 Hz environ.

- *une pression sur la touche T4* incrémente les jours de 1 et fait passer le pointeur $T_4$ en fixe. Une pression maintenue plus de une seconde entraîne une incrémentation à 4 Hz.

Si l'opérateur a créé des combinaisons de jours, l'ordre est le suivant:
Combinaison 1 = $C_1$ (pour la voie considérée), combinaison 2 = $C_2$, tous les jours, lundi, mardi .... dimanche, Combinaison 1 $C_1$ etc.....
Si l'opérateur n'a pas créé de combinaisons de jours, l'ordre est: tous les jours, lundi, mardi .... dimanche, tous les jours etc....

- *une pression sur la touche A/B* fait passer de la programmation de la voie A à celle de la voie B (passage du segment AI au segment BI ou de A0 à B0).
- *une pression courte sur la touche "ENTER"* (durée < 1 seconde) valide la consigne qui vient d'être écrite et fait passer à la consigne suivante avec l'affichage suivant:
- si elle est vide, l'affichage:
- de l'état inverse de celui de la consigne précédente
- du même jour ou de la même combinaison de jours
- de quatre barres "- - - -" sur les zones de chiffre
- le clignotement des quatre pointeurs $T_1$, $T_2$, $T_3$, $T_4$
- du symbole PRG
- sinon, le contenu de cette consigne est en particulier
- l'état pour la voie considérée
- le jour
- l'heure et minutes
- le symbole PRG

– le clignotement des quatre pointeurs.

Après la programmation de la dernière consigne, une pression courte sur "ENTER" fait afficher

– S T O P sur les quatre zones de chiffre
– PRG
– tous les autres sigles ou segments étant éteints.

– *une pression supplémentaire fait revenir à menu.*
– *une pression longue sur la touche "ENTER" (durée, > 1 seconde) fait à tout moment, repasser à menu.*

e) *Relecture, modification et annulation*

Après avoir programmé des consignes, et être sorti du mode changement, l'opérateur peut, s'il le désire, rappeler ce mode, le fonctionnement est identique à celui ci-dessus; les consignes apparaissent dans l'ordre où l'opérateur les a créées.

Il peut donc:

– relire les consignes rentrées précédemment en se servant uniquement de la touche "ENTER";
– modifier le contenu des consignes;
– annuler des consignes en faisant apparaître les quatre barres "- - - -" par pression sur la touche $T_2$ après 23h.

Il convient de noter que lorsqu'une consigne est annulée (affichage de "- - - -" sur les zones de chiffre) seul le contenu de l'heure de cette consigne est modifié. En effet, si l'opérateur veut modifier uniquement les heures d'une consigne sans altérer les minutes ni les jours et si il est obligé de repasser par "- - - -", il ne faut pas perdre les minutes, ni l'état, ni le jour, ni la voie de la consigne.

En outre, dans le cas où, par exemple la consigne à modifier est: "état I, 20h30, Mercredi, voie A4" et l'utilisateur veut: "état I, 18h30, Mercredi, voie A4", il doit donc par pression sur la touche $T_2$ passer de 20h à 18h et il passe par l'affichage de "- - - -" qui correspond à un pas vide mais où le contenu de la voie, de l'état, des minutes et des jours n'est pas perdu.

Une consigne n'est validée que si une heure ou des minutes ont été programmées (tant que l'affichage de la consigne comprend les 4 barres, la consigne n'est pas exécutée).

3) *Création de combinaisons de jours*

A partir de l'affichage du menu, une pression sur la touche $T_4$ permet de sélectionner cette fonction qui a pour but, dans le cas où, au cours de la semaine, le même programme doit être exécuté plusieurs jours, d'effectuer un regroupement de ces jours, ce qui permet d'écrire ensuite un seul programme propre à ce regroupement.

Selon cet exemple de réalisation, dans ce mode de fonctionnement, les combinaisons de jour sont obligatoirement affectées à une voie (A ou B), deux combinaisons pouvant être créées par voie.

La pression sur la touche $T_4$ pour entrer dans ce mode de fonctionnement provoque l'affichage suivant:

– l'affichage de l'un des symboles 🧍 ⌁ selon qu'est affichée la première ou la seconde combinaison de chaque voie;
– le symbole 🧍 qui correspond à une période de travail permettant d'effectuer une combinaison $C_1$ de jours;
– le symbole ⌁ qui correspond à une période de repos permettant d'effectuer une combinaison $C_2$ de jours.
– le clignotement des deux pointeurs triangulaires repérés $T_1$ et $T'4$ à 1 Hz environ.
– le clignotement à 1 Hz environ du jour pointé lors de l'entrée dans ce mode: clignotement du segment $J_1$ (lundi).
– l'affichage en fixe des segments de jours sélectionnés au tres que celui qui est pointé; et
– l'affichage de 1 ou 0 selon que le jour pointé (segment clignotant) est sélectionné ou non dans la combinaison de la voie donc de:

AI ou A0 pour les combinaisons de la voie A
BI ou B0 pour les combinaisons de la voie B

Dans ce mode de fonctionnement, le mode opératoire est le suivant:

– Une pression sur la touche $T_4$ permet de déplacer, immédiatement le pointeur de sélection de jour de un emplacement. Une pression maintenue conduit, après une seconde à une incrémentation à 4 Hz environ. (déplacement du segment $J_1$ au segment $J_7$ puis retour au segment $J_1$).
– Chaque pression sur la touche $T_1$ permet d'inverser le choix précédent pour le jour pointé sélection ou non sélection: les symboles "I" et "0" indiquent la sélection ou l'absence de sélection pour la voie considérée (AI A0 ou BI B0). Il est ainsi possible de corriger la combinaison.
– Lorsque la combinaison est jugée correcte, sa prise en compte se fait par pression sur la touche "ENTER". Le processeur propose alors la combinaison suivante: l'ordre normal est: combinaison 1 de la voie A, puis $C_2$ voie A, $C_1$ voie B et $C_2$ voie B.
– La pression sur "ENTER" lorsque l'appareil est en $C_2$ voie B, fait revenir en affichage du menu.
– Le retour vers l'affichage du menu est également possible à tout moment par une pression maintenue (une seconde environ) sur "ENTER".
– Lors de la création des combinaisons, le processeur propose pour la combinaison $C_2$ (voie A et B) les jours qui n'ont pas été retenus dans la combinaison $C_1$. Mais l'opérateur à l'aide des touches $T_1$ et $T_4$ peut refuser cette proposition et créer la combinaison dont il a besoin: il est possible qu'un (ou plusieurs) jour soit sélectionné dans les (deux combinaisons d'une même voie.

- A partir du moment où l'opérateur a créé une combinaison $C_2$ différente de celle proposée par le processeur, celui-ci ne fait plus de proposition pour cette voie et se contente d'afficher les combinaisons créées.
- Lorsque l'opérateur passe de $C_2$ A à $C_1$ B par pression sur "ENTER" et si aucune combinaison n'a été créée pour B le processeur propose pour $C_1$ B la combinaison $C_1$ A, sinon il propose la combinaison $C_1$ B créée préalablement.

La visualisation des combinaisons peut être obtenue selon le même mode opératoire que pour la création.

Il convient de noter que:

- les combinaisons sont codées et c'est ce code qui est utilisé dans les consignes avec pour conséquences:
- l'annulation d'une combinaison entraîne la non exécution et l'absence de visualisation des consignes l'utilisant;
- la modification d'une combinaison est exécutée;
- si un jour est sélectionné dans les deux combinaisons d'une même voie, les consignes utilisant les deux combinaisons seront traitées ce jour là.

4) *Visualisation*

A partir de l'affichage du menu, une pression sur la touche $T_3$ permet de sélectionner cette fonction.

Dans ce mode de fonctionnement, les périodes de marche et d'arrêt sont visualisées par jour et par voie sur le cadran de vingt-quatre segments chaque segment représente une tranche de 1 heure de 0 à 23h. Il est allumé si la sortie selon le programme doit être active au moins 1 mn pendant l'heure concernée.

De plus, l'utilisateur peut, s'il souhaite une information plus fine, demander une visualisation dans l'ordre chronologique et sous forme digitale des consignes *exécutables le jour* sélectionné (effet de loupe).

La pression sur la touche $T_3$ pour rentrer dans ce mode de fonctionnement provoque l'affichage suivant:

- l'affichage du symbole $\triangleleft$ (les autres symboles du menu sont supprimés)
- le clignotement des pointeurs triangulaires $T_1$ et $T_4$ à 1 Hz environ
- l'affichage du segment du jour visualisé ($J_1$ à $J_7$) lors de l'entrée dans ce mode affichage du segment $J_1$ du lundi
- l'affichage des repères du cadran 6, 12, 18 et des 22 points P qui gradutent le cadran
- la visualisation des segments Si du cadran pour lesquels la sortie est active au moins une minute pendant l'heure correspondante pour le jour et la voie considérés.

Si l'utilisateur n'a pas demandé de visualisation digitale:

- les digits sont éteints
- · AI et A0 sont allumés si la visualisation se rapporte à la voie A sinon SI et B0 sont allumés.

Sinon:

- les digits affichent le contenu de la consigne
- affichage de AI si la consigne demande état I voie A
- affichage de A0 si la consigne demande état 0 voie A
- affichage de BI si la consigne demande état I voie B
- affichage de B0 si la consigne demande état 0 voie B

**Mode Operatoire**

- Une pression sur la touche $T_4$ fait afficher le graphe du jour suivant. Lorsqu'on arrive à dimanche de la voie A, on revient à lundi de la voie A. De plus, lorsque l'opérateur a préalablement demandé une visualisation digitale, une pression sur éteint les zones de chiffre et fait afficher I et 0.
- Le passage de la voie A à la voie B se fait à l'aide de la touche A/B (on passe au même jour voie B).
- Une pression sur la touche $T_1$ fait afficher les consignes sous forme digitale et dans l'ordre chronologique d'exécution pour le jour sélectionné. S'il n'y a pas de consigne ce jour là, affichage de "----" et de l'état considéré ce jour pour la sortie. Lorsque la dernière consigne du jour est affichée, une pression sur la touche $T_1$ ramène à la première consigne de ce jour.
- Une pression sur la touche "ENTER" fait repasser à menu.

Il apparaît clairement de la description qui précède que, grâce aux multiples combinaisons obtenues par l'utilisation conjointe de touches dynamiques et de touches de fonction usuelles, les dimensions du clavier peuvent être réduites à un strict minimum, tandis que l'exploitation du dispositif de commutation est considérablement facilité grâce à l'usage du menu symbolisé sur la plage de fonction du dispositif de visualisation.

Comme précédemment mentionné, le dispositif de commande à programmation horaire selon l'invention peut comprendre un capot mobile pouvant prendre une position ouverte dans laquelle il autorise l'accès à toutes les touches du clavier et une position fermée dans laquelle seule, une partie des touches est accessible.

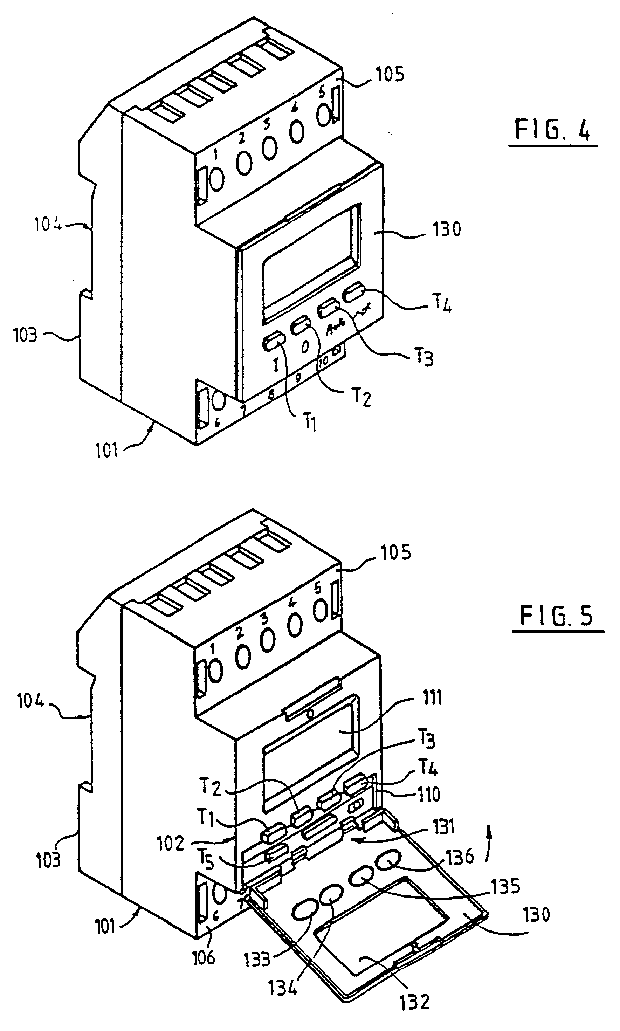

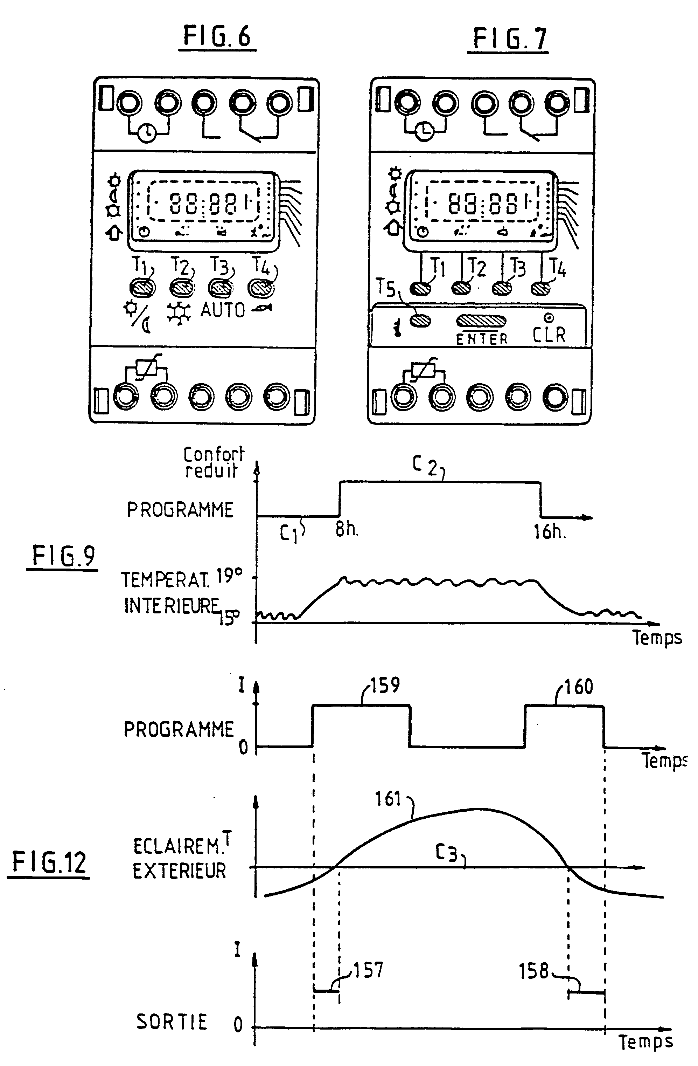

Les figures 4 et 5 montrent un exemple d'exécution d'un dispositif de commande similaire à celui des figures 1 et 2, mais équipé d'un tel capot.

Dans cet exemple, le capot 130 présente une forme rectangulaire, aux dimensions de la face frontale 110 de l'étagement 102 et est articulé sur le boîtier, au niveau de la bordure inférieure de ladite face 110 (articulation 131).

Il comprend une fenêtre 132, de forme rectangulaire dont les dimensions correspondent à celles de la surface 111. Cette fenêtre 132 est disposée de manière à ce qu'en position fermée (figure 6), position dans laquelle le capot 132 est rabattu contre la face frontale 110, elle permette la vision de la surface d'affichage 111.

Ce capot 132 comprend en outre quatre évidements 133, 134, 135, 136 disposés de manière à assurer le passage, et, en conséquence autoriser l'actionnement des touches dynamiques $T_1$, $T_2$, $T_3$, $T_4$ dans ladite position fermée.

On constate donc qu'en position fermée seul le mode exploitation peut être utilisé, le passage en mode changement ne pouvant s'effectuer qu'après ouverture du capot 132 afin de libérer notamment la touche "ENTER".

Avantageusement, le capot 132 pourra porter, au droit des orifices 133 à 136 les symboles représentatifs des fonctions assurées par les touches dynamiques correspondantes $T_1$ à $T_4$ dans le mode exploitation.

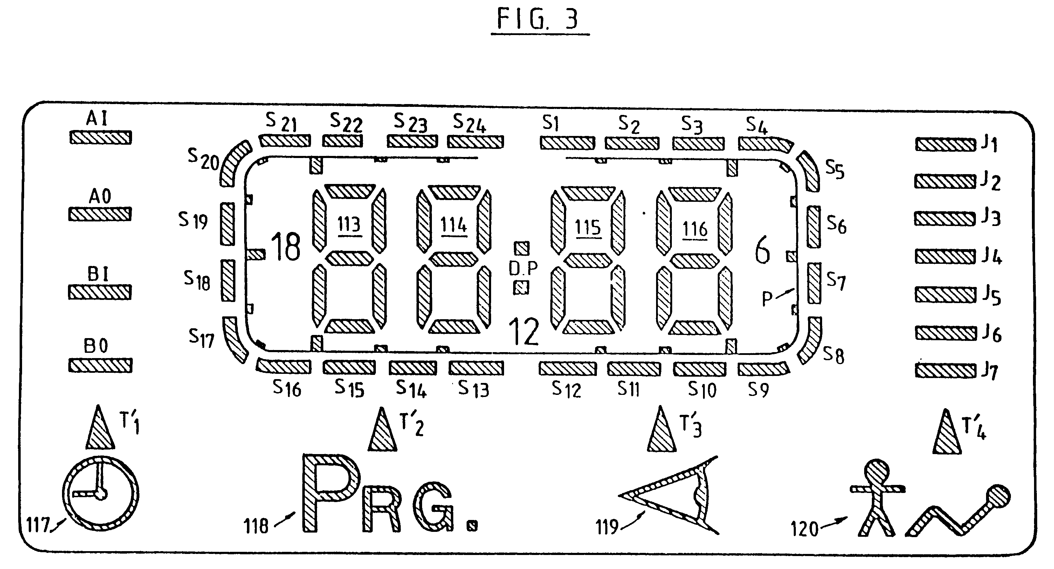

Dans l'exemple décrit en regard des figures 1 à 3, le dispositif de commande joue simplement le rôle d'un interrupteur programmable, pouvant assurer la commande directe d'un processus.

Il est clair que l'invention ne se limite pas à ce seul type d'application.

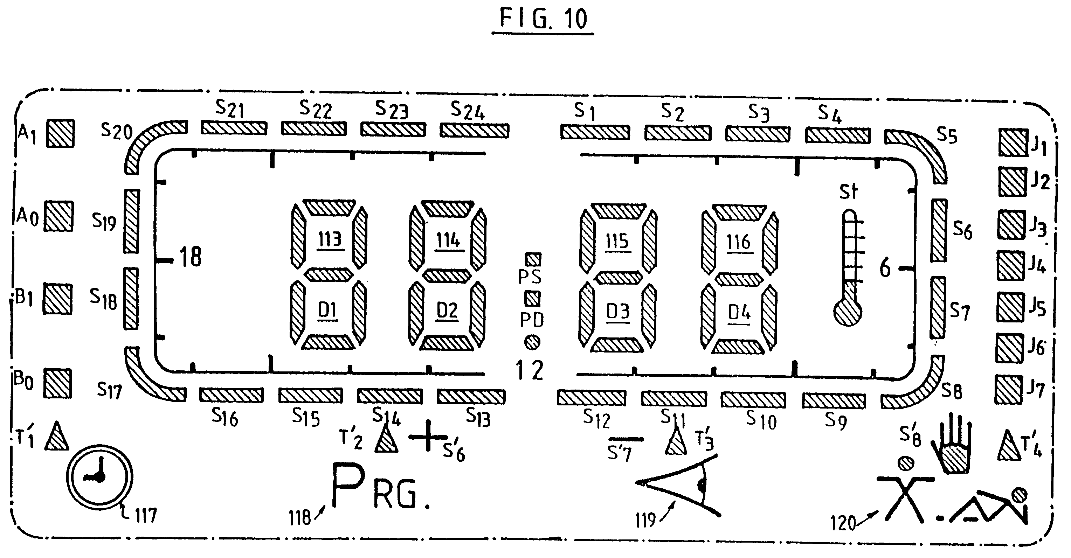

Ainsi les figures 6 à 10 illustrent un exemple d'application du dispositif de commande à une régulation de température à consigne programmée.

Ce dispositif de commande comprend un boîtier du type de celui décrit à propos des figures 4 et 5 dont la face avant est représentée sur les figures 6 et 7, capot fermé (figure 6) et capot ouvert (figure 7). Toutefois, pour tenir compte de la spécificité de ce dispositif, la symbologie utilisée sur la surface d'affichage et d'une façon plus générale sur la face avant a été légèrement modifiée.

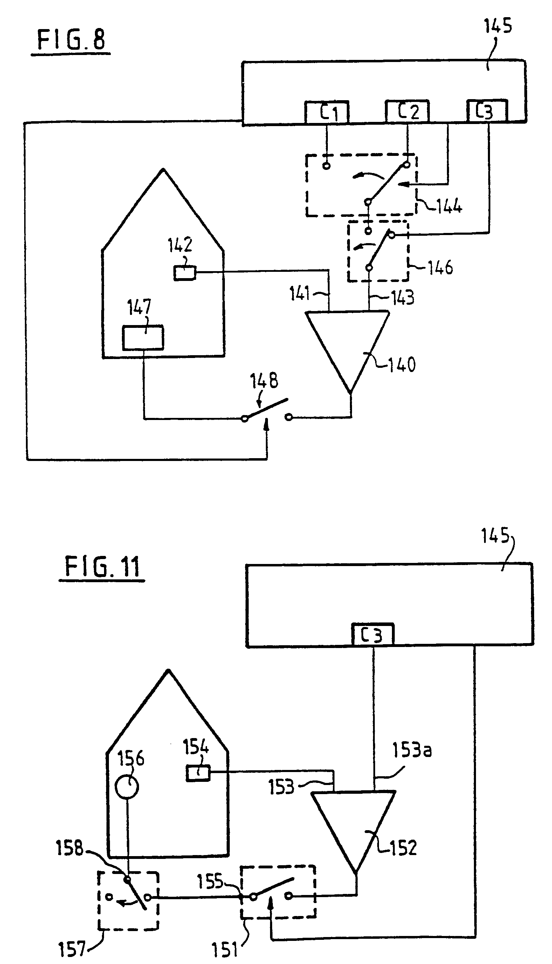

A la différence du dispositif précédemment décrit, il ne possède qu'une seule voie dont le circuit a été représenté schématiquement sur la figure 8.

Ce circuit comporte, en particulier, un comparateur 140 dont l'une des deux entrées 141 est reliée à une sonde de mesure de température 142 et dont l'autre entrée 143 peut être portée à une tension de consigne $C_1$, $C_2$ ou $C_3$ par l'intermédiaire de deux commutateurs: 144 commandé par le programmateur horaire 145 (qui assure la commutation de $C_1$ ou $C_2$ en fonction du programme horaire) et 146 servant à assurer le forçage de la consigne à la valeur $C_3$.

Le comparateur 140 peut être relié par sa sortie au circuit de commande d'un dispositif de chauffage 147 et ce par l'intermédiaire d'un interrupteur 148 servant à assurer le forçage à 0 du dispositif. Comme illustré sur la figure 11, le fonctionnement de ce circuit est alors le suivant: en l'absence de forçage, le comparateur 140 ne délivrera un signal de commande de chauffage que si la température mesurée par le détecteur 142 est inférieure à la valeur de consigne imposée par le programme horaire préalablement établi de la façon précédemment indiquée.

D'une façon plus précise, à l'aide de ce dispositif, l'utilisateur peut programmer des périodes de régulation à deux niveaux de consigne, à savoir un niveau haut (consigne confort par exemple à 20°C), ce niveau de consigne étant indiqué sur le boîtier et sur le capot par un symbole 150 figurant un soleil, situé au droit du segment $A_1$ et un niveau bas (consigne réduite) indiqué par un symbole 151 figurant une lune, situé au droit du segment $A_0$. A ces deux consignes programmables est adjointe une consigne standard, par exemple de 8°C dite de hors-gel. Cette consigne est indiquée sur le boîtier et sur le capot par un symbole 152 représentant un flocon de neige situé au droit du segment $B_1$.

L'utilisateur peut effectuer un même dialogue que celui précédemment décrit pour ce qui concerne les phases de menu, la mise à l'heure, la programmation horaire, la visualisation des programmes et les modifications des combinaisons de jours. Seuls diffèrent les points suivants:

- la programmation des consignes de régulation,
- les forçages en mode exploitation.

La touche A/B ($T_5$) qui servait précédémment à sélectionner la voie est maintenant utilisée pour la visualisation de la mesure effectuée par le capteur 142 et pour la programmation des consignes.

A cette touche $T_5$ est affecté un symbole 153 représentant un thermomètre sur le boîtier.

La programmation des consignes qui n'est possible qu'en mode exploitation, mais capot ouvert pour avoir accès à la touche $T_5$, peut s'effectuer grâce aux procédures suivantes:

- une procédure d'étalonnage du dispositif et d'affichage de la température,
- une procédure de programmation de la consigne confort,
- une procédure de programmation de la consigne réduite, et
- une programmation de la température hors-gel.

La procédure d'étalonnage et d'affichage de la température mesurée par le capteur 142 débute par une pression sur la touche $T_5$ qui provoque l'affichage:

- en fixe, d'un symbole ST qui représente un thermomètre et d'un point PD (point décimal) situé entre les plages de visualisation des heures et des minutes 114 et 115,
- en fixe, de la grandeur de la température mesurée en dizaine de dégrés sur la plage 113, en degrés sur la plage 114, en dixième de degrés sur la plage 115,
— clignotant, de deux symboles S'₆, S'₇ représentant le signe + et le signe - respectivement disposés au droit des touches T₂ et T₃.

A ce stade, les autres segments de la plage d'affichage sont éteints et les touches T₁, T₄ et ENTER ne sont pas prises en compte.

La grandeur M' affichée la première fois, après une première mise sous tension présente l'erreur de température qui s'assimile à une erreur d'Off-set. A l'aide des touche T₂ qui provoque une incrémentation et T₃ qui effectue une décrémentation, il est possible de corriger la valeur affichée pour la rendre identique à la valeur fournie par un appareil étalon.

La procédure de programmation de la température confort est obtenue par deux pressions successives sur la touche T₅ à partir du mode exploitation ou d'une seule pression à partir de la position étalonnage.

A la suite de cette action, l'affichage comprend alors:

— en fixe, le symbole ST,
— en fixe, le segment A₁,
— en fixe, la consigne de température confort sur les plages 113, 114 et 115,
— clignotant, les segments S'₆ et S'₇.

La programmation se fait à l'aide des touches T₂ et T₃, la touche T₂ assurant l'incrémentation et la touche T₃, la décrémentation de la valeur affichée.

On accède à la programmation de la température réduite par trois pressions successives sur la touche T₅, à partir du mode exploitation, ou par une pression de cette touche à partir du mode de programmation décrit au sujet de la programmation de la température confort.

Les différences sont:

— l'affichage du segment A0 (au lieu de A₁),
— l'affichage de la température.

Le passage à la programmation de la température hors-gel s'obtient en effectuant quatre pressions successives sur la touche T₅ ou une pression à partir de la programmation de la température réduite.

Cette action entraîne l'affichage du segment B₁ et, la première fois, l'affichage de la consigne standard (8°C).

Une pression sur la touche T₅ fait ensuite revenir en mode exploitation.

Lorsque le dispositif précédemment décrit se trouve en mode exploitation, capot fermé, une procédure de forçage peut être effectuée.

Cette procédure de forçage fait intervenir les touches T₁, T₂, T₃ et T₄ qui seules sont apparentes.

A ces quatre touches correspondent alors les dérogations au fonctionnement programmé qui sont indiquées par les symboles correspondants représentés sur le capot.

Ainsi, dans ce mode de fonctionnement, la touche T₁ sert à obtenir une inversion de l'état programmé: si l'appareil régulait par rapport à la consigne confort, après une pression sur la touche T₁, il va réguler par rapport à la consigne de température réduite et retourne au fonctionnement programmé lors de la coïncidence de l'heure courante avec la consigne horaire suivante et inversement dans le cas où l'appareil régulait initialement par rapport à la consigne de température réduite.

Pendant ce forçage, l'affichage est le suivant:

— allumage d'un segment S'₈ qui symbolise une main,
— clignotement du segment A₁, A₀ correspondant (A₁ correspondant à la consigne confort et A₀ correspondant à la consigne réduite).

La touche T₂ sert à assurer un forçage permanent: suite à une pression sur la touche T₂, l'appareil régule par rapport à la consigne hors-gel de manière permanente jusqu'à l'annulation du forçage par une pression sur la touche T₃. Cette touche T₃ annule en effet les forçages précédemment réalisés et ramène le dispositif en régulation selon le programme établi. La touche T₄ a une fonction analogue à celle qui a été décrite dans l'exemple représenté sur les figures 1 à 3.

Comme précédemment mentionné, le dispositif de commande à programmation horaire selon l'invention peut être adapté de manière à ce que l'ordre fourni par le programme horaire ne consiste qu'en une habilitation ou une inhibition, l'ordre de commande étant alors fourni, pendant les périodes d'habilitation que pour des valeurs prédéterminées du paramètre mesuré, en relation éventuelle avec une valeur de consigne préalablement mémorisée.

Ce type de fonctionnement sera décrit ci-après à propos de l'interrupteur crépusculaire qui se trouve illustré par les figures 11 et 12.

Comme on peut le voir sur la figure 11, cet interrupteur fait intervenir un programmateur horaire 145 du type de ceux précédemment décrit qui assure la commande d'un interrupteur 151 monté à la sortie d'un comparateur 152 dont l'une des entrées 153 est connectée à un détecteur 154 apte à mesurer l'éclairement du lieu à surveiller et dont l'autre entrée 153a reçoit une valeur de consigne C₃. La borne 155 de l'interrupteur 151 est quant à elle reliée à un circuit de commande d'éclairage 156.

Cet interrupteur crépusculaire a plus particulièrement pour fonction de permettre à l'utilisateur de programmer des périodes de marche autorisée (I) et d'arrêt (O) et une consigne d'éclairement.

La sortie (borne 158 de l'interrupteur) est active lorsque le niveau d'éclairement mesuré est inférieur à la valeur de consigne C₃ dans une période d'autorisation de marche (interrupteur 151 fermé) ou lorsque l'interrupteur 157 est en position "marche forcée".

Ceci permet de commander automatiquement la mise en marche et l'arrêt d'un éclairage (enseignes publicitaires, vitrines, bureaux, éclairage public, etc...) en fonction du niveau d'éclairement et des heures de présence.

Ce fonctionnement se trouve illustré sur la figure 12 dans laquelle on a représenté deux périodes 157, 158, dans lesquelles la sortie (borne 155) est active, ces deux périodes correspondant chacune à une période 159, 160 de marche autorisée par le programme horaire (habilitation) et à un niveau d'éclairement (courbe d'éclairement 161) inférieur à une valeur de consigne.

L'état de l'interrupteur 151 (imposé par le programme horaire) est visualisé par les segments $A_1$ et $A_0$:

- le segment $A_1$ indique, lorsqu'il est allumé, une habilitation de la commande d'éclairage (interrupteur 151 fermé),
- le segment $A_0$ indique une inhibition de la commande d'éclairage (interrupteur 151 ouvert).

Le segment $B_0$ lorsqu'il est allumé indique quant à lui l'activation de la commande d'éclairage et quand il est éteint, une désactivation de cette commande.

La structure générale du dispositif restant sensiblement la même que dans l'exemple précédemment décrit, les différents modes de fonctionnement ne seront pas décrits à nouveau.

Il convient de noter, toutefois, que dans ce cas la mesure du niveau d'éclairement extérieur s'obtient, à partir du mode exploitation, en effectuant une pression sur la touche $T_5$ qui provoque l'affichage:

- de la grandeur M' mesurée par le détecteur, sur les plages 115 et 116,
- du segment $B_0$,
- de la lettre L, sur la plage 113.

Les autres symboles sont alors éteints.

On peut ensuite accéder au mode de programmation de la consigne par une pression sur la touche $T_5$ (ou par deux pressions sur cette touche en partant du mode exploitation), cette action provoquant l'affichage:

- en fixe de la valeur de consigne sur les plages 115 et 116,
- en clignotant des symboles (+ -) $S'_6$ et $S'_7$,
- en fixe du segment $B_1$,
- en fixe de la lettre L sur la plage 113.

Au premier affichage consécutif à une première mise sous tension, la valeur de la consigne affichée est 00.

Dans ce mode programmation de la consigne, seules les touches $T_2$ (incrémentation), $T_3$ (décrémentation) et $T_5$ sont prises en compte.

Une pression sur la touche $T_5$ fait revenir en mode exploitation.

Comme précédemment, lorsque le dispositif est en mode exploitation, seules les touches $T_1$, $T_2$, $T_3$ et $T_4$ sont apparentes. A ces quatre touches correspondent les dérogations (forçages) au fonctionnement programme.

Ainsi, si l'appareil était dans une phase d'autorisation de commande d'éclairage, une pression sur la touche $T_1$ le fera passer dans une phase d'arrêt (et inversement) et ceci, jusqu'à la prochaine consigne horaire programmée. Pendant ce forçage, l'affichage est le suivant:

- allumage du segment $S'_6$ en fixe (dans l'exemple représenté sur la figure 6 ce segment symbolise une main),
- clignotement du segment $A_1$ ou $A$ 0 ($A_1$ correspondant a l'autorisation de marche et $A_0$ correspondant à l'arrêt).

Une pression sur la touche $T_2$ active le commutateur de manière permanente jusqu'à l'annulation de ce forçage par une action sur la touche $T_3$ (forçage permanent).

Cette pression sur la touche $T_3$ annule les forçages réalisés précédemment et ramène l'appareil en régulation par rapport au programme établi.

Il va de soi que l'on peut apporter des modifications au mode de réalisation décrit sans sortir du cadre de l'invention.

**Revendications**

1. Dispositif de commutation horaire programmable du type comprenant un circuit de commutation comportant au moins une voie (A, B), un dispositif d'affichage constitué par une cellule à cristaux liquides présentant une plage de visualisation horaire et un clavier comprenant un premier ensemble de touches permettant d'effectuer au moins le passage d'un mode de fonctionnement "Exploitation" au cours duquel se déroule le programme de commutation, à un mode de fonctionnement "Changement" pendant lequel l'opérateur peut créer ou modifier ledit programme, puis de revenir ensuite au mode de fonctionnement "Exploitation", ce premier ensemble de touches permettant d'effectuer également l'introduction de données, caractérisé en ce que ladite cellule comprend en outre une plage de fonctions comprenant plusieurs zones (117, 118, 119, 120) permettant chacune de visualiser des symboles de fonction qui changent selon le mode de fonctionnement dans lequel se trouve le dispositif, ces symboles constituant, pour chacun de ces modes, un menu différent de fonctions que l'opérateur a la possibilité d'exécuter, en ce que le susdit premier ensemble de touches ("ENTER", CLR, A/B) permet en outre de valider une donnée introduite en mode changement et de passer ensuite à une donnée suivante, et en ce que le clavier comprend en outre un second ensemble de touches dynamiques multifonction ($T_1$ à $T_4$) respectivement disposées en regard desdites zones et dont les fonctions, qui changent d'un mode de fonctionnement à l'autre, sont indiquées par les symboles présents dans les zones correspondantes.

2. Dispositif selon la revendication 1, caractérisé en ce que le dispositif d'affichage (111) comprend une plage programme (P, $S_i$) permettant de visualiser le spectre du programme sur un jour.

3. Dispositif selon l'une des revendications 1 et 2, caractérisé en ce que le passage d'un mode principal de fonctionnement à l'autre, la validation d'une donnée introduite et le passage à la donnée suivante sont réalisés par une seule et même touche "ENTER" du premier ensemble.

4. Dispositif selon l'une des revendications 1 à 3, caractérisé en ce que le susdit premier ensemble de touches comprend une touche (A/B) permettant de sélectionner une voie (A ou B) du circuit de commutation en effectuant sur cette touche (A/B) une pression pour la première voie, deux pressions pour la deuxième voie et n pressions pour la nième voie.

5. Dispositif selon l'une des revendications 1 à 4, caractérisé en ce que le susdit premier ensemble de touches comprend une touche d'annulation de programme (CLR).

6. dispositif selon l'une des revendications précédentes, caractérisé en ce que le susdit second ensemble de touches comprend quatre touches dynamiques ($T_1$ à $T_4$) alignées sous le dispositif d'affichage (111) et associées à quatre zones d'affichage (117 à 120) de symboles respectives du dispositif d'affichage.

7. Dispositif selon l'une des revendications précédentes, caractérisé en ce que la plage programme comprend un segment (P) formé d'une pluralité de points disposés selon un contour fermé pour former une graduation et une pluralité de segments ($S_i$) uniformément répartis autour de ladite graduation pour indiquer, en combinaison avec celle-ci, le spectre du programme du jour.

8. Dispositif selon la revendication 7, caractérisé en ce que la pluralité de points du segment de graduation (P) et la pluralité de segments de spectre ($S_i$) sont disposées autour de la plage de visualisation horaire, celle-ci comprenant quatre ensembles (113 - 116) à sept segments aptes à représenter un chiffre de 0 à 9.

9. Dispositif selon l'une des revendications précédentes, caractérisé en ce qu'à chacune des zones d'affichage de symboles (117 à 120) de la plage de fonction est associé un pointeur ($T_1$ à $T_4$).

10. Dispositif selon l'une des revendications précédentes dans lequel le deuxième ensemble de touches comprend quatre touches dynamiques ($T_1$ à $T_4$), caractérisé en ce que, en mode exploitation, deux des quatre touches ($T_1, T_2$)

servent à indiquer la nature du forçage des voies du circuit de commutation, une troisième touche ($T_3$) sert à l'annulation des forçages et la quatrième touche ($T_4$) sert à indiquer les jours de la semaine à partir duquel le processeur exécute le programme du dimanche à la place des programmes initialement prévus pour les différents jours de travail.

11. Dispositif selon la revendication 10, caractérisé en ce qu'une pression sur la susdite quatrième touche ($T_4$) provoque le clignotement du jour de début de forçage qui peut consister en le jour courant, lors du premier passage dans ce mode de programmation ou le jour précédemment retenu lorsqu'une opération de forçage a déjà été réalisée, en ce que chaque pression ultérieure sur la quatrième touche décale de 1 le segment de jour clignotant et, en ce que la validation du forçage s'effectue soit manuellement par appui sur la touche "ENTER" soit automatiquement, au bout d'une période de temps prédéterminée après la dernière pression sur ladite quatrième touche ($T_4$).

12. Dispositif selon l'une des revendications précédentes, caractérisé en ce que le deuxième ensemble de touches comprend quatre touches dynamiques ($T_1$ à $T_4$), et en ce que, en mode changement, une première touche ($T_1$) est associée à une première zone d'affichage de symbole indiquant la fonction de mise à l'heure, une deuxième touche ($T_2$) est associée à une deuxième zone indiquant la fonction de programmation des consignes PRG, une troisième touche ($T_3$) est associée à une troisième zone indiquant la fonction de visualisation et la quatrième touche ($T_4$) est associée à une zone indiquant la fonction de création de combinaison de jours, lesdites zones définissant ainsi un menu.

13. Dispositif selon la revendication 12, caractérisé en ce que, en mode changement, une pression sur la première touche ($T_1$) (mise à l'heure) entraîne la suppression des symboles des deuxième (118), troisième (119) et quatrième (120) zones d'affichage de symboles, et en ce que la modification de l'heure est ensuite obtenue par une pression sur les deuxième ($T_2$), troisième ($T_3$) et quatrième ($T_4$) touches dynamiques qui provoque une incrémentation, respectivement, de l'heure, de la minute et du jour, la fin de la mise à l'heure étant validée par la touche "ENTER".

14. Dispositif selon l'une des revendications 12 et 13, caractérisé en ce que, en mode changement, une action sur la deuxième touche ($T_2$) (programmation) entraîne la suppression des symboles des première (117), troisième (119) et quatrième (120) zones d'affichage de symboles, et en ce qu'ensuite, une pression sur la première touche dynamique ($T_1$) entraîne un changement d'état de la consigne, une pression sur la deuxième touche ($T_2$) incrémente l'heure, une pression sur la troisième touche dynamique ($T_3$) incrémen-

te les minutes et une pression sur la quatrième touche dynamique (T₄) incrémente les jours de la consigne en cours de programmation.

15. Dispositif selon la revendication 14, caractérisé en ce que, en mode changement, après avoir exercé une pression sur la seconde touche (T₂), une pression courte sur la touche "ENTER" valide la consigne qui vient d'être écrite et fait passer à la consigne suivante, de sorte que par des pressions courtes sur la touche "ENTER" il est possible d'effectuer une relecture du programme tandis qu'une pression longue sur cette touche "ENTER" permet de revenir au menu.

16. Dispositif selon l'une des revendications 12 à 15, caractérisé en ce que, en mode changement, une action sur la quatrième touche (T₄) (création de combinaison de jours) entraîne la suppression des symboles des première (117), deuxième (118) et troisième (119) zones d'affichage des symboles, en ce qu'ensuite une pression sur la quatrième touche (120) permet de déplacer le pointeur de jour de un emplacement, et en ce que chaque pression sur la première touche (T₁) permet d'inverser le choix précédent pour le jour pointé.

17. Dispositif selon l'une des revendications 12 à 16, caractérisé en ce que, en mode changement, une action sur la troisième touche (T₃) (visualisation) entraîne la suppression des symboles des première (117), seconde (118) et quatrième (120) zones d'affichage des symboles, en ce qu'une pression sur la quatrième touche (T₄) fait afficher le graphe du jour suivant, et en ce qu'une pression sur la première touche (T₁) fait afficher les consignes sous forme numérique et dans l'ordre chronologique d'exécution pour le jour sélectionné.

18. Dispositif selon l'une des revendications 1 à 17, caractérisé en ce que le dispositif d'affichage (111) comprend une plage (A₀, A₁ B₀, B₁) d'indication de l'état de la sortie de la voie du circuit de commutation.

19. Dispositif selon l'une des revendications 9 à 18, caractérisé en ce que chaque pointeur (T₁ - T₄) associé à une relation entre un symbole et une touche dynamique respective (T₁ - T₄) est clignotant lorsque le symbole en regard est alloué à la touche dynamique, le clignotement du pointeur cessant lorsqu'une pression est exercée sur la touche dynamique respective.

20. Dispositif selon l'une des revendications précédentes, caractérisé en ce qu'il comprend un capot mobile pouvant prendre une position ouverte dans laquelle il autorise l'accès à toutes les touches du clavier, et une position fermée dans laquelle il interdit l'accès à une partie des touches.

21. Dispositif selon la revendication 20, caractérisé en ce que les touches laissées accessibles en position fermée du capot sont les touches dynamiques T₁ à T₄.

22. Dispositif selon la revendication 21, caractérisé en ce que le capot (132) comprend des symboles représentatifs des fonctions assurées par les touches dynamiques T₁ à T₄, lorsqu'il est fermé.

23. Dispositif selon l'une des revendications précédentes, caractérisé en ce qu'il comprend des moyens pour fournir un ordre de commande dont l'état est à la fois fonction du programme horaire établi par l'utilisateur et de la valeur d'un paramètre mesuré.

24. Dispositif selon la revendication 23, caractérisé en ce que, dans le cas où le processus est asservi, il comprend des moyens (146) aptes à fournir, a chacune des périodes successives programmées, une valeur de consigne prédéterminée au circuit d'asservissement.

25. Dispositif selon la revendication 24, caractérisé en ce qu'il comprend un comparateur (140) apte à comparer le paramètre mesuré et la valeur de consigne définie par le programme et à délivrer un signal de commande du processus, fonction du résultat de cette comparaison.

26. Dispositif selon la revendication 5, caractérisé en ce qu'il comprend des moyens permettant, à l'aide des touches dynamiques (T₁ à T₄) d'effectuer l'étalonnage du dispositif d'affichage de la température mesurée, et la programmation des consignes.

27. Dispositif selon l'une des revendications 1 à 23, caractérisé en ce que l'ordre de commande déterminé par le programme horaire consiste en un ordre d'habilitation ou un ordre d'inhibition et en ce qu'il comprend des moyens (151, 152) aptes à ne transmettre un ordre de commande, pendant les périodes d'habilitation que pour des valeurs prédéterminées d'au moins un paramètre mesuré, en relation avec une valeur de consigne préalablement mémorisée.

## Claims

1. Device for programmable time switching of the type comprising a switching circuit having at least one line (A, B), a display device formed by a cell containing liquid crystals having a time display area and a keyboard with a first set of keys for passing at least from a "working" operating mode, during which the switching program takes place, to a "change" operating mode, during which the operator may create or modify said program and then come back to the "working" operating mode, said first set of keys also allowing data introduction, characterized in that said cell further comprises a function area comprising several regions (117, 118, 119, 120), each allowing the display of function symbols which change according to the operating mode set for the device, these symbols forming for each of said modes a different menu of functions which the operator may execute, in that said first set of keys ("ENTER", CLR, A/B) further allows validation of a datum introduced during the "change" mode and the subsequent passage to a following datum, and in that the keyboard further comprises a second set of multi-function dynamic keys ($T_1$ to $T_4$) respectively situated opposite said regions and whose functions, which change from one operating mode to the other, are indicated by the symbols present in the corresponding regions.

2. The device as claimed in claim 1, characterized in that the display device (111) comprises a programming area (P, $S_i$) for displaying the spectrum of the program of one day.

3. The device as claimed in one of claims 1 and 2, characterized in that the passage from a main operating mode to another, validation of an introduced datum and the passage to the following datum are operated by one and the same key "ENTER" of the first set.

4. The device as claimed in one of claims 1 to 3, characterized in that said first set of keys comprises a key (A/B) for selecting a line (A or B) of the switching circuit by pushing once said key (A/B) for the first line, twice for the second line and n times for the nth line.

5. The device as claimed in one of claims 1 to 4, characterized in that said first set of keys comprises a key (CLR) for cancelling the program.

6. The device as claimed in one of the preceding claims, characterized in that said second set of keys comprises four dynamic keys ($T_1$ to $T_4$) aligned below the display device (111) and associated with four respective symbol display regions (117 to 120) of the display device.

7. The device as claimed in one of the preceding claims, characterized in that the program area comprises a portion (P) formed by a plurality of points located according to a closed outline for forming a graduation and a plurality of segments ($S_i$) evenly spaced around said graduation, in order to show, in combination therewith, the spectrum of the program of the day.

8. The device as claimed in claim 7, characterized in that the plurality of points of the graduation portion (P) and the plurality of segments of the spectrum ($S_i$) are located around the time display area, this latter comprising four sets (113 - 116) of seven segments adapted to represent a number from 0 to 9.

9. The device as claimed in one of the preceding claims, characterized in that an index ($T_1$, to $T_4$) is associated with each of the symbol display regions (117 to 120) of the function area.

10. The device as claimed in one of the preceding claims, in which the second set of keys comprises four dynamic keys ($T_1$ to $T_4$), characterized in that, in the "working" mode, two of the four keys ($T_1$, $T_2$) serve to show the nature of the forcing of the lines of the switching circuit, a third key ($T_3$) serves to cancel the forcings and the fourth key ($T_4$) serves to show the day of the week when the processor will begin to execute the Sunday program instead of the programs initially provided for the different working days.

11. The device as claimed in claim 10, characterized in that a pressure on said fourth key ($T_4$) causes flashing of the day when the forcing will begin, which may be the instant day for the first passage to said programming mode or the previously determined day when a forcing operation has already been executed, in that each subsequent pressure on the fourth key offsets by 1 the flashing day segment, and in that validation of the forcing is operated either manually by pressing the "ENTER" key or automatically, at the end of a predetermined period of time after the last pressure on said fourth key ($T_4$).

12. The device as claimed in one of the preceding claims, characterized in that the second set of keys comprises four dynamic keys ($T_1$ to $T_4$), and in that, in the "change" operating mode, a first key ($T_1$) is associated with a first symbol display region showing the time setting function, a second key ($T_2$) is associated with a second region showing the PRG reference data programming function, a third key ($T_3$) is associated with third region showing the display function, and the fourth key ($T_4$) is associated with a region showing the function of creating a combination of days, said regions thus defining a menu.

13. The device as claimed in claim 12, characterized in that, in the "change" mode, a pressure on the first key ($T_1$) (time setting) causes elimination of the symbols of the second (118), third (119) and fourth (120) symbol display regions, and in that the time modification is then obtained by pressing the second ($T_2$), third ($T_3$) and fourth ($T_4$) dynamic keys, which causes incrementation respectively of the hour, the minute and the day, the end of the time setting being validated by the "ENTER" key.

14. The device as claimed in one of claims 12 and 13, characterized in that, in the "change" mode, an action on the second key ($T_2$) (programming) causes elimination of the symbols of the first (117), third (119) and fourth (120) symbol display regions, and in that a pressure on the first dynamic key ($T_1$) then causes a change of state of the reference order, a pressure on the second key ($T_2$) increments the hour, a pressure on the third dynamic key ($T_3$) increments the minutes and a pressure on the fourth dynamic key ($T_4$)

increments the days of the reference order which is being programmed.

15. The device as claimed in claim 14, characterized in that, in the "change" mode, after having pressed the second key ($T_2$), a brief pressure of the "ENTER" key validates the reference order just entered and causes passing to the following reference order, so that it is possible, by brief pressures on the "ENTER" key, to read out once more the program, whereas a prolonged pressure on said "ENTER" key allows coming back to the menu.

16. The device as claimed in one of claims 12 to 15, characterized in that, in the "change" mode, an action on the fourth key (T4) (creation of a day combination) causes elimination of the symbols of the first (117), second (118) and third (119) symbol display regions, in that a pressure on the fourth key (120) then allows displacement by one location of the day index, and in that each pressure on the first key ($T_1$) allows inversion of the preceding choice for the day designed by the index.

17. The device as claimed in one of claims 12 to 16, characterized in that, in the "change" mode, an action on the third key ($T_3$) (display) causes elimination of the symbols of the first (117), second (118) and fourth (120) symbol display regions, in that pressure on the fourth key ($T_4$) causes display of the graph of the following day, and in that pressure on the first key ($T_1$) causes display of the reference orders of the selected day in digital form and according to an order of execution in time.

18. The device as claimed in one of claims 1 to 17, characterized in that the display device (111) comprises an area ($A_0$, $A_1$, $B_0$, $B_1$) showing the state of the output of the switching circuit line.

19. The device as claimed in one of claims 9 to 18, characterized in that each index ($T_1$ to $T_4$) associated with a connection between a symbol and a respective dynamic key ($T_1$ - $T_4$) flashes when the oppositely located symbol is associated with the dynamic key, whereas the flashing of the index stops when a pressure is exerted on the respective dynamic key.

20. The device as claimed in one of the preceding claims, characterized in that it comprises a mowable lid which can take an open position giving access to all the keys of the keyboard, and a closed position in which it bars access to part of the keys.

21. The device as claimed in claim 20, characterized in that the keys which remain accessible in the closed position of the lid are the dynamic keys ($T_1$ to $T_4$).

22. The device as claimed in claim 21, characterized in that the lid (132) comprises symbols representative of the functions carried out by the dynamic keys ($T_1$ to $T_4$) when it is closed.

23. The device as claimed in one of the preceding claims, characterized in that it comprises means for supplying a control order the state of which is both depending on the time program set by the user and on the value of the measured parameter.

24. The device as claimed in claim 23, characterized in that, when the process is servo-controlled, it comprises means (146) for supplying to the servo-control circuit a predetermined reference value at each of the successive programmed periods.

25. The device as claimed in claim 24, characterized in that it comprises a comparator (140) adapted for comparing the measured parameter and the reference value as defined by the program and for delivering a signal for controlling the process as a function of the result of said comparison.

26. The device as claimed in claim 5, characterized in that it comprises means for adjusting, by means of the dynamic keys ($T_1$ to $T_4$), the device for displaying the measured temperature and for programming the reference data.

27. The device as claimed in one of claims 1 to 23, characterized in that the control order determined by the time program consists of a validation order or an inhibition order, and in that it comprises means (151, 152) for only transmitting a control order, during the validation periods, for predetermined values of at least one measured parameter in relation with a previously stored reference value.

**Patentansprüche**

1. Vorrichtung zur programmierbaren Zeitschaltung des Typs mit einem Schaltkreis, der mindestens eine Linie (A, B) aufweist, einer Anzeigevorrichtung, die von einer flüssige Kristalle enthaltenden Zelle gebildet wird, welche einen Zeitanzeigebereich und eine Tastatur aufweist, mit einem ersten Tastensystem, das es ermöglicht, mindestens den Übergang vom Funktionsmodus "Auswertung", während dessen das Schaltprogramm abläuft, zu einem Funktionsmodus "Wechsel" vorzunehmen, während dessen der Bedienungsmann besagtes Programm aufstellen oder abändern kann und dann auf die Auswertungsfunktion zurückzukommen und besagtes erstes Tastensystem ebenfalls die Dateneingabe ermöglicht, dadurch gekennzeichnet, dass besagte Zelle ausserdem einen Funktionsbereich mit mehreren Zonen (117, 118, 119, 120) aufweist, die es jeweils ermöglichen, Funktionssymbole sichtbar zu machen, die sich je nach dem Funktionsmodus in dem sich die Vorrichtung befindet ändern und diese Symbole für jede dieser Funktionsarten ein unterschiedliches Menu von Funktionen darstellen, welche der Bedienungsmann ausführen kann und dass besagtes erstes Tastensystem ("ENTER", CLR, A/B) es ausserdem ermöglicht, einen im Funktionsmodus "Wechsel" eingegebenen Wert gültig zu machen und dann zum nächsten Wert überzugehen und dass die Tastatur ausserdem ein zweites System von dynamischen Mehrzwecktasten ($T_1$ bis $T_4$) aufweist, die jeweils gegenüber besagten Zonen angeordnet sind und deren Funktion, die sich von einem Funktionsmodus zum andern ändert, durch die in den entsprechenden Zonen sichtbaren Symbole angezeigt wird.

2. Vorrichtung nach Anspruch 1, dadurch gekennzeichnet, dass die Anzeigevorrichtung (111) einen Programmbereich (P, $S_i$) aufweist, der es ermöglicht, das Programmspektrum eines Tages sichtbar zu machen.

3. Vorrichtung nach einem der Ansprüche 1 und 2, dadurch gekennzeichnet, dass der Übergang von einem Hauptfunktionsmodus zum anderen, die Gültigmachung eines eingegebenen Wertes und der Übergang zum folgenden Wert durch ein und dieselbe Taste "ENTER" des ersten Systems erfolgen.

4. Vorrichtung nach einem der Ansprüche 1 bis 3, dadurch gekennzeichnet, dass besagtes erstes Tastensystem eine Taste (A/B) aufweist, welche es ermöglicht, eine Linie (A oder B) des Schaltkreises auszuwählen, indem auf besagte Taste (A/B) ein einziger Druck für die erste Linie, zweimal ein Druck für die zweite Linie und n mal ein Druck für die nte Linie ausgeübt wird.

5. Vorrichtung nach einem der Ansprüche 1 bis 4, dadurch gekennzeichnet, dass besagtes erstes Tastensystem eine Programmannulliertaste (CLR) aufweist.

6. Vorrichtung nach einem der vorhergehenden Ansprüche, dadurch gekennzeichnet, dass besagtes zweites Tastensystem vier dynamische Tasten ($T_1$ bis $T_4$) aufweist, die unter der Anzeigevorrichtung (111) in Reihe angeordnet und vier Zonen (117 bis 120) zur Sichtbarmachung der entsprechenden Symbole der Anzeigevorrichtung zugeordnet sind.

7. Vorrichtung nach einem der vorhergehenden Ansprüche, dadurch gekennzeichnet, dass der Programmbereich einen Abschnitt (P) aufweist, gebildet von einer Vielzahl von Punkten, die entlang einer geschlossenen Aussenlinie angeordnet sind, um eine Graduierung zu bilden, sowie eine Vielzahl von gleichmässig um besagte Graduierung verteilten Abschnitten ($S_i$), um, zusammen mit dieser, das Spektrum des Tagesprogrammes anzuzeigen.

8. Vorrichtung nach Anspruch 7, dadurch gekennzeichnet, dass die Vielzahl von Punkten (P) des Graduierungsabschnittes (P) und die Vielzahl der Spektrumsabschnitte ($S_i$) um den Zeitanzeigebereich herum angeordnet sind und dieser vier Einheiten (113 - 116) mit sieben Abschnitten aufweist, die eine Zahl von 0 bis 9 darstellen können.

9. Vorrichtung nach einem der vorhergehenden Ansprüche, dadurch gekennzeichnet, dass jeder der Symbolanzeigezonen (117 - 120) des Funktionsbereiches ein Zeiger ($T_1$ bis $T_4$) zugeordnet ist.

10. Vorrichtung nach einem der vorhergehenden Ansprüche, in welcher das zweite Tastensystem vier dynamische Tasten ($T_1$ bis $T_4$) aufweist, dadurch gekennzeichnet, dass im "Auswertungs" modus zwei der vier Tasten ($T_1$, $T_2$) dazu dienen, die Art der Forcierung der Linien des Schaltkreises anzuzeigen, eine dritte Taste ($T_3$) dazu dient, die Forcierungen zu annullieren und die vierte Taste ($T_4$) dazu dient, die Tage der Woche anzuzeigen, von wo ab der Prozessor das Sonntagsprogramm statt des ursprünglich für die verschiedenen Arbeitstage vorgesehenen Programmes ausführt.

11. Vorrichtung nach Anspruch 10, dadurch gekennzeichnet, dass ein Druck auf besagte vierte Taste ($T_4$) den Tag zum Blinken bringt, an dem die Forcierung beginnt, wobei dieser Tag der gegenwärtige Tag sein kann, wenn es sich um den ersten Übergang zu diesem Programmiermodus handelt oder aber der vorher schon festgelegte Tag, wenn schon ein Forcierungsgang ausgeführt wurde, dass jeder weitere Druck auf die vierte Taste den blinkenden Tagesabschnitt um 1 verschiebt und dass die Gültigmachung der Forcierung entweder manuell durch Drücken der "ENTER" taste erfolgt oder automatisch, nach Ablauf einer vorbestimmten Zeitdauer nach dem letzten Druck auf besagte vierte Taste ($T_4$).

12. Vorrichtung nach einem der vorhergehenden Ansprüche, dadurch gekennzeichnet, dass das zweite Tastensystem vier dynamische Tasten ($T_1$ bis $T_4$) aufweist und dass, während des "Wechsel" modus die erste Taste ($T_1$) einer ersten Symbolanzeigezone zugeordnet ist, welche die Zeiteinstellungsfunktion anzeigt, eine zweite Taste ($T_2$) einer zweiten Zone zugeordnet ist, welche die Funktion der Einstellungswerteprogrammierung PRG anzeigt, eine dritte Taste ($T_3$) einer dritten Zone zugeordnet ist, welche die Anzeigefunktion anzeigt und die vierte Taste ($T_4$) einer Zone zugeordnet ist, welche die Gestaltung der Tagekombination anzeigt, und besagte Zonen so ein Menu bilden.

13. Vorrichtung nach Anspruch 12, dadurch gekennzeichnet, dass im "Wechsel" modus ein Druck auf die erste Taste ($T_1$) (Zeiteinstellung) das Verschwinden der Symbole der zweiten (118), dritten (119) und vierten (120) Symbolanzeigezonen zur Folge hat und dass danach eine Veränderung der Uhrzeit durch Druck auf die zweite (T2), dritte (T3) und vierte (T4) dynamische Taste erreicht wird, wodurch jeweils die Stunde, die Minute und der Tag inkrementiert werden und die Zeiteinstellung durch die "ENTER" taste gültiggemacht wird.

14. Vorrichtung nach einem der Ansprüche 12 und 13, dadurch gekennzeichnet, dass im "Wechsel" modus die Betätigung der zweiten Taste (T2) (Programmierung) das Verschwinden der Symbole der ersten (117), dritten (119) und vierten (120) Symbolanzeigezonen zur Folge hat und dass danach ein Druck auf die erste dynamische Taste (T1) einen Statuswechsel des Einstellwertes zur Folge hat, ein Druck auf die zweite Taste (T2) die Stunde, ein Druck auf die dritte dynamische Taste (T3) die Minuten und ein Druck auf die vierte dynamische Taste (T4) die Tage des in Programmierung begriffenen Einstellwertes inkrementiert.

15. Vorrichtung nach Anspruch 14, dadurch gekennzeichnet, dass im "Wechsel" modus, nachdem ein Druck auf die zweite Taste (T2) ausgeübt wurde, ein kurzer Druck auf die "ENTER" Taste den eben eingegebenen Einstellwert gültigmacht und den Übergang zum folgenden Einstellwert bewirkt, sodass es, jeweils durch einen kurzen Druck auf die "ENTER" Taste möglich ist, das Programm nochmals abzulesen, während ein langer Druck auf besagte "ENTER" Taste es ermöglicht, auf das Menu zurückzukommen.

16. Vorrichtung nach einem der Ansprüche 12 bis 15, dadurch gekennzeichnet, dass im "Wechsel" modus eine Betätigung der vierten Taste (T4) (Gestaltung der Tagekombination) das Verschwinden der Symbole der ersten (117), zweiten (118) und dritten (119) Symbolanzeigezonen zur Folge hat, dass danach ein Druck auf die vierte Taste (120) den Tagesanzeiger um einen Stellenwert verschiebt und dass jeder Druck auf die erste Taste (T1) die vorhergehende Wahl für den eingestellten Tag umkehrt.

17. Vorrichtung nach einem der Ansprüche 12 bis 16, dadurch gekennzeichnet, dass im "Wechsel" modus eine Betätigung der dritten Taste (T3) (Sichtbarmachung) das Verschwinden der Symbole der ersten (117), zweiten (118) und vierten (120) Symbolanzeigezonen zur Folge hat, dass ein Druck auf die vierte Taste (T4) das Ablaufdiagramm des folgenden Tages sichtbar macht und ein Druck auf die erste Taste (T1) die Einstellwerte in Digitalform und in zeitlicher Ablaufsfolge für den ausgewählten Tag sichtbar macht.

18. Vorrichtung nach einem der Ansprüche 1 bis 17, dadurch gekennzeichnet, dass das Anzeigesystem (111) einen Bereich (A0, A1, B0, B1) aufweist, der den Zustand des Ausgangs des Schaltkreises anzeigt.

19. Vorrichtung nach einem der Ansprüche 9 bis 18, dadurch gekennzeichnet, dass jeder Zeiger (T1, - T4) der einer Verbindung von einem Symbol und einer entsprechenden dynamischen Taste (T1 - T4) zugeordnet ist, blinkt, wenn das entsprechende Symbol der dynamischen Taste zugeordnet wird und dass der Zeiger aufhört zu blinken, wenn auf die entsprechende dynamische Taste ein Druck ausgeübt wird.

20. Vorrichtung nach einem der vorhergehenden Ansprüche, dadurch gekennzeichnet, dass sie eine bewegliche Haube aufweist, die eine geöffnete Stellung einnehmen kann, in der alle Tasten der Tastatur zugänglich sind und eine geschlossene Stellung, in der sie den Zugang zu einem Teil der Tasten verhindert.

21. Vorrichtung nach Anspruch 20, dadurch gekennzeichnet, dass die in der geschlossenen Stellung der Haube zugänglich bleibenden Tasten die dynamischen Tasten (T1 bis T4) sind.

22. Vorrichtung nach Anspruch 21, dadurch gekennzeichnet, dass die Haube (132) Symbole aufweist, welche die von den dynamischen Tasten (T1 bis T4) ausgeübten Funktionen bei geschlossener Haube darstellen.

23. Vorrichtung nach einem der vorhergehenden Ansprüche, dadurch gekennzeichnet, dass sie Mittel zur Abgabe eines Steuerbefehls aufweist, dessen Beschaffenheit sowohl von dem vom Benutzer aufgestellten Programm als auch vom Wert eines gemessenen Parameters abhängt.

24. Vorrichtung nach Anspruch 23, dadurch gekennzeichnet, dass sie, wenn der Vorgang gesteuert wird, Mittel (146) enthält, die für jede der nacheinander programmierten Perioden an den Steuerkreis einen vorbestimmten Sollwert abgeben.

25. Vorrichtung nach Anspruch 24, dadurch gekennzeichnet, dass sie einen Komparator (140) aufweist, der den gemessenen Kennwert und den vom Programm vorgegebenen Sollwert vergleicht und ein Signal zur Steuerung des Vorgangs abgibt, welches vom Ergebnis des besagten Vergleichs abhängt.

26. Vorrichtung nach Anspruch 5, dadurch gekennzeichnet, dass sie Mittel aufweist, um mittels der dynamischen Tasten (T1 bis T4) die Eichung der Temperaturanzeigevorrichtung und die Programmierung der Einstellwerte vorzunehmen.

27. Vorrichtung nach einem der Ansprüche 1 bis 23, dadurch gekennzeichnet, dass der vom Zeitprogramm vorbestimmte Steuerbefehl aus einem Gültigmachungsbefehl oder einem Neinbefehl besteht und dass sie Mittel (151, 152) aufweist, die es ermöglichen, während der Gültigmachungsperioden einen Steuerbefehl nur für bestimmte Werte mindestens eines gemessenen Kennwertes abzugeben, in Verbindung mit einem vorher eingespeicherten Referenzwert.

FIG.1

FIG.2

EP 0 176 383 B1

# FIG. 3

EP 0 176 383 B1

FIG. 4

FIG. 5

## FIG.6

## FIG.7

T1  T2  T3  T4

☼/☽  ☼  AUTO

T5  T1  T2  T3  T4

ENTER  CLR

## FIG.9

Confort
reduit

PROGRAMME

C 2

C₁   8h.                16h.

TEMPERAT. 19°
INTERIEURE 15°

Temps

## FIG.12

I

PROGRAMME

159              160

0

Temps

ECLAIREM.ᵀ
EXTERIEUR

161

C₃

I

157              158

SORTIE   0

Temps

FIG.8

FIG.11

# FIG. 10